# EUROPEAN PATENT APPLICATION

(11) **EP 1 091 581 A2**
(43) Date of publication of application: **11.04.2001**
(21) Application number: 00308697.2
(22) Date of filing: 03.10.2000
(51) Int. Cl.: H04N 7/16

(54) **Improvements relating to electronic program guide**

(30) Priority: 06.10.1999 GB 9923502
(71) Applicant: Pace Micro Technology PLC, Saltaire, Shipley, BD18 3LF (GB)
(72) Inventor: Smith, Mark, Steeton, Keighly BD20 6HH (GB)
(74) Representative: Wood, Graham

(57) **Abstract**

The invention to which this application relates is an improvement to an electronic programme guide which is typically provided in relation to a television broadcast system. The electronic programme guide is typically generated from data which is transmitted from a remote location to a receiver at a premises and displayed on a display screen connected to the receiver. In accordance with the invention the user can refer to the guide and select a programme or programmes scheduled to be shown at a time in the future and details and/or identification for the selected programme are held in a memory in the receiver. In one embodiment a display can be generated which shows the user the details of those programmes selected.

## Description

The invention to which this application relates is an improvement to an electronic programme guide which is typically provided as part of a television broadcast system. The electronic program guide is typically generated from data which is broadcast from a remote location to a receiver at a premises. The guide is generated and shown to the user of the receiver on a display screen such as a television set connected to the receiver, or in which the receiver is provided. The guide can then be referred to by the user to ascertain what programmes are on various channels at the present time or in the future, to find out details of particular programmes, order programmes through pay per view and so on.

The present invention is provided to improve the use of an electronic programme guide. It is found that as the number of available channels and programmes to watch proliferates, so the use of electronic programme guides is becoming increasingly necessary as the use of newspapers and printed programme listings becomes increasingly impractical. However a problem with electronic programme guides is that although the user can select and view programmes of interest at a particular time, it is not possible for them to be able to indicate or generate a record of when programmes of interest to them are to be shown in the future.

The aim of the present invention is to provide an electronic programme guide which illustrates to the user programmes which are available to view and allows the user to select programmes of interest from the display and then store the same in a manner which allows the programmes which have been selected to be viewed at a later time.

In a first aspect of the invention there is provided an electronic programme guide comprising data broadcast to a receiver, said data representative of a programme schedule which is generated by the receiver and displayed on screen, said guide relating to programmes which are available to be viewed at that time and/or in the future, and characterised in that the user of the guide when displayed on screen is provided with a control means to allow selection of at least one of the programmes displayed and details relating to the selected programme are identified from the data which has been transmitted and received and are placed into a memory for subsequent retrieval.

In one embodiment, the programme details which are stored in the memory are the programme title, the time of broadcast and the channel on which the same is broadcast.

Typically the memory is provided in the receiver and is of sufficient size to receive details for a plurality of programmes. Typically, if the memory holds details of a plurality of programmes the same can be provided in a particular order which may be predetermined or selected by the user, such as, for example, in date and time order in terms of when the selected programme is to be broadcast.

In a further feature of the invention, in addition to holding the selected programme details in the memory, the receiver also generates a display of the selected programmes which can be selected to be viewed by the user. Typically the display indicates to the user whether there is any overlap in the timings of the programmes displayed. If there is an overlap, the display may indicate if the programme is to be shown at any different time.

It is envisaged that the memory will be required to be of a sufficient size to hold details of programmes which are to be broadcast over , say a week or fortnight spell of time.

In one embodiment when the start time of a stored programme is detected by the receiver, the receiver is activated to tune to the correct channel location and the programme is displayed on the display screen, if switched on. Additionally or alternatively, a predetermined time before the start time of a selected programme a video overlay or other indication is generated on the display screen by the user to indicate that the selected programme is due to commence at a time in the future.

In an alternative embodiment, to select to view a selected programme at the time of transmission, the user can control the broadcast data receiver to generate the display of selected programmes and then select the appropriate programme from that display in the same manner as a conventional electronic programme guide such that the receiver tunes to the channel location of the programme.

A specific embodiment of the invention is now described with reference to the accompanying drawings, wherein
Figure 1 illustrates a view of a typical Electronic programme Guide display; and
Figure 2 illustrates a view of a display generated in accordance with the invention as herein described.

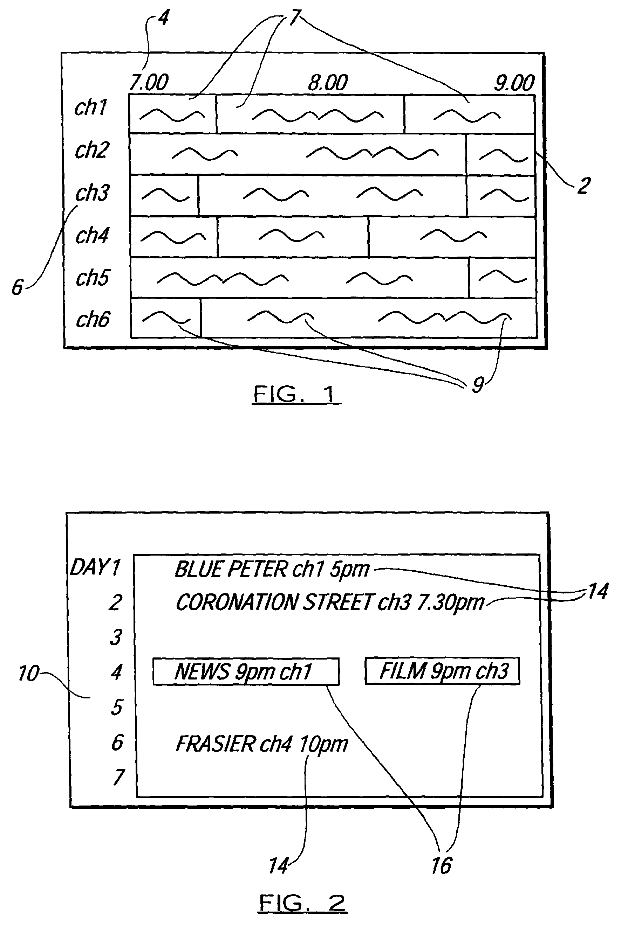

Referring firstly to Figure 1 there is illustrated an Electronic Programme guide of the type displayed on the screen of a television set connected to a receiver. In order to generate the display, the receiver receives a stream of data which is broadcast to it along with the video and audio data from which the programmes to be displayed are generated. The data for the electronic programme guide is processed at the receiver and is updated at regular intervals and/or the same data is transmitted at regular intervals and can include, in addition to data for the generation of the display of Figure 1, data which allows the generation of a display providing more detailed information on programmes selected from the display of Figure 1, the facility to purchase programmes by pay per view and other functions.

The display of Figure 1 illustrates a grid 2 which comprises a time bar 4 for a period of time of, in this case, two hours. A channel column 6 is provided which indicates at least some of the channels which are available for viewing. For each channel a number of programme portions 7 are provided. Each portion relates to a television programme and the start and finish of each portion, with reference to the time bar, indicates the start and finish times for broadcast of the programmes. The portion also includes some form of indication of the programme title 9 which here is not of relevance to the particular invention and therefore no actual titles are illustrated.

It should be appreciated that the display of Figure 1 illustrates one part of the larger electronic programme guide grid 2 and the user is able, typically via a remote control device, in conjunction with the receiver, to select to view displays for other channels available at that time, and also to advance the guide so that it indicates programmes available for viewing later on the same day and/or days in the future. Indeed it has been found that the user frequently wishes to view the displays for the days ahead to see what is on and plan their viewing schedule. However, at the present time there is no known way by which the user can, having viewed the available programmes for, say the week ahead, select and store programmes from these displays and it is to this that the current invention is directed.

In accordance with the current invention, the user, when viewing the display for programmes to be displayed in the future, can, via the remote control or other selection means highlight or otherwise indicate a programme or programmes of interest to them on the display for storage. If they wish to store the programme details in accordance with the invention they can select to store the same in a similar manner to selecting to view a programme via the guide and remote control. However as the programme cannot be viewed at the time of selection as it is not going to be transmitted until a time in the future when the receiver receives the select signal it retrieves the data for the selection in terms of programme, time and date of display and stores the same in a memory until the day and time of display arrives. The data which is retrieved will be among the data which is transmitted to the receiver as part of the electronic programme guide data from a broadcaster.

The memory in the receiver is preferably of sufficient size to receive data for a number of programmes. Subsequently to the user making the selection they then have the option to view a display on screen which is generated from the data held in the memory and Figure 2 illustrates an embodiment of such a display. In addition or alternatively they may select to have a reminder message displayed on screen a set time period prior to the time of display of each of the selected programmes in the memory.

In the display of Figure 2 there is provided a time interval 10 of five days and an indication of the selected programmes is displayed. Portions 14 are provided which indicate the programme titles , channel of transmission and time of transmission and so indicate to the user the programmes which have previously been selected by them, when they are to be broadcast and on which channel. Another feature of the display is that it will indicate to the user where there is an overlap between selected programmes shown at the same time and in Figure 2 it can be seen that the selected programmes 16 are highlighted to indicate overlap between the programmes selected on day 4. The user can then have the option of deleting and or adding programmes as time passes and once a programme display time has passed the same will be removed from the display and the memory.

As previously stated it is also possible that an on screen reminder can be generated a predetermined time before a selected programme is due to be broadcast to indicate to the user that the transmission time of one of their previously selected programmes is approaching.

It should also be appreciated that in one embodiment a number of users of the apparatus may input details of programmes so that the display which is generated in accordance with the invention holds details of programmes of interest to a number of users. Alternatively, the receiver may include a number of memories or a segmented memory and each of which holds programme details for designated users of the apparatus. This would allow each user to have their own customised display which shows details of programmes of interest to them only and which can be activated by the user inputting an identifying code , typically via remote control.

By providing the display and memory system as herein described the user of the system benefits inasmuch that they are able to generate a customised electronic programme guide which is tailored to show the times of broadcast of the programmes of interest to them and/or other users of the receiver apparatus and allows them to view this customised display as and when they wish.

## Claims

1. An electronic programme guide comprising data broadcast to a receiver, said data representative of a programme schedule which is generated by the receiver and displayed on screen, said guide relating to programmes which are available to be viewed at that time and/or in the future, and characterised in that the user of the guide when displayed on screen is provided with a control means to allow selection of at least one of the programmes displayed and details relating to the selected programme are identified from the data which has been transmitted and received and are placed into a memory for subsequent retrieval.

2. An electronic programme guide according to claim 1 characterised in that the memory is provided as part of the receiver.

3. An electronic programme guide according to claim 1 characterised in that the programme details which are stored in the memory are any, or any combination of the programme title, the time of broadcast and the channel on which the same is broadcast.

4. An electronic programme guide according to claim 1 characterised in that details and identification for a number of programmes are stored in the memory.

5. An electronic programme guide according to claim 4 characterised in that the details for each programme stored in the memory can be stored in a user defined order.

6. An electronic programme guide according to claim 1 characterised in that a display is selectively generated by the receiver for display on the display screen to indicate the programmes selected and for which data is stored in the memory.

7. An electronic programme guide according to claim 6 characterised in that the display includes a visual indication of any overlap between the transmission times of any of the selected programmes.

8. An electronic programme guide according to claim 1 characterised in that when the start time of a stored programme is detected by the receiver, the receiver is activated to tune to the correct channel location and the programme is displayed on the display screen, if switched on.

9. An electronic programme guide according to claim 1 characterised in that a predetermined time before the start time of transmission of a selected programme, a video overlay or other indication is generated on the display screen by the receiver to indicate to the user that the selected programme is due to commence at the predetermined time in the future.

10. An electronic programme guide according to claim 1 characterised in that to select to view a selected programme at the time of transmission of the programme the user can control the broadcast data receiver to generate a display of selected programmes and then select to view the appropriate programme from that display and the receiver tunes to the channel location of the programme.
